# EUROPEAN PATENT APPLICATION

(11) **EP 0 757 890 A1**
(43) Date of publication of application: **12.02.1997**
(21) Application number: 96202139.0
(22) Date of filing: 29.07.1996
(51) Int. Cl.: A01K 87/00

(54) **Method of manufacturing fishing rods, and a fishing rod produced by such a method**

(30) Priority: 04.08.1995 IT PN950043; 06.10.1995 IT PN950050
(71) Applicant: TRIANA s.r.l., 33084 Cordenons (Pordenone) (IT)
(72) Inventor: Onofri, Maurizio, 33084 Cordenons (Pordenone) (IT)

(57) **Abstract**

Method of manufacturing from composite a new type of multi-action fishing rod (4).

The method involves wrapping more layers of composite around forming mandrels (6) that are permanently bent or temporarily bent during the polymerization and/or thermosetting of composite.

The result is that the fishing rod (4), or at least a part of it, has a longitudinal prebending that can be oriented in more angular positions with respect to the longitudinal axis of the rod (4).

Different bending actions of the rod (4) correspond to said angular positions of the longitudinal prebending.

## Description

The present invention relates to an improved method of manufacturing fishing rods and a novel multi-action fishing rod which is produced by such a method.

There exist many types of fishing rods that are different in components, sizes and in the assembling system of their components.

In the present invention, the term "fishing rod" includes single-piece rods, rods made by a plurality of sections or tubular elements that are longitudinally connected one into the other by a male-female insertion of a fixed-type or of a telescopic type and the length regulating extensions to be connected to the butt-grip of a fishing rod in order to vary its fishing distance.

Presently, most fishing rods are produced with reinforced plastic materials such as for example thermoplastic or thermosetting epoxy or phenolic resins reinforced with carbon or glass fibers or the like.

In a per se known manner, the manufacturing process provides that the plastic material and the reinforced material are wrapped, as a single fabric and/or separated the one from the other, around suitable conic-cylindric shaped metallic mandrels and that are successively covered with a holding plastic film.

The so covered mandrel is finally heat treated thus causing the polymerization and/or the setting of the composite in its final tubular shape.

Said tubular elements are usually made with a conic-cylindric-shaped longitudinal-section and with a circular and/or oval and/or polygonal shaped cross-section.

The length of the fishing rods can generally range from 2-3 meters to about 13 meters and in some more sphisticated rods can be over 17 meters.

It is known that by increasing the length of a rod it generally increases its downwards flexion when the rod is hold in an almost horizontal position.

In fact, the fishing rod is statically like a one-end fixed bracket and subjected to a bending stress both by its weight and by the weight of the line concentrated on the overhanging end.

It is also known that among the features of a fishing rod it is particularly important its kind of action, that is the bending given by the rod when its top is subjected to a traction not parallel to the longitudinal axis of the rod.

Generally, a fishing rod is said of parabolic-action when its bends like an open parabol, with its maximum bending located at about half length, of point-action when only its far end bends, with its maximum bending point located within the last third of the rod length, or of mid-action when the rod gives a bending intermediate between the above described.

The parabolic-action rods are generally more resilient but less ready to respond to the stresses given by the angler.

The point-action rods are on the contrary more rigid and also faster in performing the movements requested by the angler.

It is obvious that point-action, parabolic-action or mid-action rods are respectively suitable to different fishing techniques.

Therefore, the skillfull angler carries on a fishing with a cumbersome set of rods having features of action different the one from the other.

The higher rigidity of the point-action rods is achieved by using either more rigid and expensive materials or a greater quantity of material.

Higher rigidity can also be achieved by increasing the cross-section of the rod.

But, this solution is suitable only with mid-length rods since with longer rods the handle section would reach such a diameter as to reduce considerably the handiness of the rod.

Therefore , a higher stiffnes of the rod generally involves an increase of its weight and its overall cost up to values that become unaceptable in rods longer than 16 meters.

For the above described reasons it is the main object of the present invention to propose a proceeding for manufacturing with composite a novel type of fishing rod having features such as to obviate the above mentioned disadvantages and to increase the possibilities of action of the rod without charging the cost of its manufacturing process.

The features of the fishing rod and of its manufacturing process are hereinfater claimed.

The aims, features and advantages of the invention will be more apparent in the following description with reference to the accompanying schematic drawings in which;
- Figure 1 illustrates, in side view, two different operating positions of the fishing rod obtained with the proceeding according to the invention;
- Figure 2 illustrates in perspective view, a mandrel for the forming of the composite that constitutes the rod according to the invention.

In the present invention the term "fishing rod" includes single-piece rods, the rods made by a plurality of tubular elements or sections that are longitudinally connectible one after the other and the length adjusting rods that are connected to the butt end in order to vary the fishing range.

The description makes particular reference to a fishing rod 4 made by a plurality of hollow tubular elements 5 that are longitudinally connectible the one after the other by a male-female coupling that can be of the fixed type insertion or of the telescopic type.

The tubular elements 5 are made with composite preferably constituted by fibers, wrappings and/or meshes of reinforcing material (i.e. carbon, glass, organic fibers with a basis of polyaramide etc.) which is impregnated with thermosetting or thermoplastic epoxy or phenolic resins.

The rod manufacturing process of a fishing rod according to the invention involves cutting the composite in sheets having sizes corresponding to the tubular elements 5 forming the rod 4.

The sheets of composite are wrapped around conic-cylindric mandrels having sizes corresponding to each tubular element to be produced.

The application of the composite is carried out by superposing one or more layers of it and by orienting the reinforcing fibers along a direction which is parallel and/or orthogonal and/or inclined with respect to the longitudinal axis of the rod 4 thus imparting to the same the desired features of rigidity and deformation strength of its cross-section.

The layers of composite are wrapped and pressed, by means of a per se known and not shown wrapping machine, and are successively covered with a holding plastic film (e.g. polypropylene) by means of a per se known and not shown taping machine.

Then, the composite wrapped around the mandrel is, in a per se known manner, heat treated thus causing the polymerization and/or the setting of the composite in its desired tubular shape.

The polymerized or thermoformed tubular elements 5 are finally separated from the respective forming mandrel, are cleaned of the holding film and subjected to curling surface finishing and testing operations.

According to the invention, the body of the rod 4, or at least a part of it, has a longitudinal prebent modelling or design.

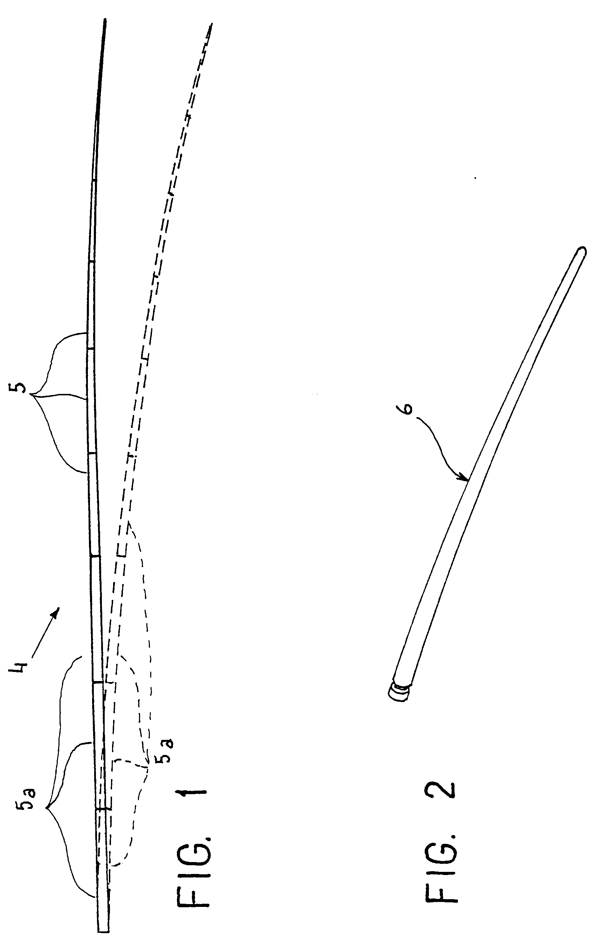

In conformity with a preferred manner of carrying out the process according to the invention, the mandrels for the forming of at least a part of the tubular elements 5 of the rod 4 are longitudinally and permanently bent like the mandrel 6 shown in the figure 2.

The bending radius of the mandrels 6 is wide enough to allow the separation from the respective tubular elements 5 by means of axial slipping off.

Alternatively, the longitudinal prebending of the tubular elements 5 is carried out by using straight mandrels.

In accordance with a first way of realization the straight mandrels are made in such a way to be elastically bent before the polymerization and/or thermosetting of the composite that covers them.

For example, the bending of the mandrels is obtained by stressing them by means of flexing ropes fastened to their ends or by introducing them into bending moulds.

After the polymerization and/or thermosetting, the mandrels are released from the flexing stress and are separated from the respective tubular elements 5a.

After that, the mandrels are brought back to their straight position and sent to the wrapping and taping machines in order to be covered with new composite to be polymerized and or thermoformed.

In accordance with a further manner of carrying it out, the longitudinal prebending is made on tubular elements 5 previously polymerized or thermoformed around straight mandrels.

Said rectilinear tubular elements 5 are first heated until the softening of the composite that form them, after that they are thermoshaped inside suitable prebending moulds.

By means of the prebending step, prebending tubular elements 5a (fig. 1) are obtained and preferably used to make up at least a part of the rod (4) object of the invention.

Preferably, said prebending elements 5a are connected one to the other so as to realize the continuity of the longitudinal prebending in said part of the rod 4.

At this purpose, the ends of the prebending tubular elements 5a are marked with suitable indicators of alignment (notches or the like per se known and not shown) suited to ease the right assembly of the rod 4.

The longitudinal prebending of the rod 4, or of at least a part of it, gives to the rod 4 according to the invention an advantageous multiplicity of actions risulting by the different orientations that the prebending can have with respect to the longitudinal axis of the rod 4.

In particular, when the convexity of the prebent elements 5a is oriented downwards, the rod 4 according to the invention can mantain a horizontal position that is more rectilinear than that given by a rod of the like length, cross-section and constituting material but entirely made up by traditional rectilinear tubular elements.

This operating position of the rod 4 is signed with full line in the figure 1.

During acceptance tests it is come out that the higher horizontal position of the rod 4 according to the invention facilitates the angler in both balancing particularly long rods (13 meters and over) with respect to their fulcrum point and executing the movements required by some phases or fishing techniques well known to the field experts.

Practically, the action of the rod 4 becomes quicker in accomplishing the movements requested by the angler.

Moreover, the higher horizontal position of the rod 4 according to the invention allows a wider and faster recall angular movement of the rod 4 when the angler tries to catch the prey biting the bait.

When the prebent elements 5a are instead rotated 180° so as to turn upwards their convexity, the rod 4 according to the invention maintains a position more bent and parabolic than that given by a rod of the like sizes and constituting materials but wholly made up of traditional rectilinear tubular elements.

This operating position of the rod 4 is signed with a broken line in the figure 1.

In this operating position, the more bending of the rod 4 can be advantageously used during those fishing phases requiring a parabolic-action of the rod 4 (as for example for the holding of big preys) or to carry out a different fishing technique without necessarily replacing the whole rod.

Out of the acceptance tests it is also emerged that the rod according to the invention tends to automatically revolve from a point-position to a parabolic-position soon after the biting by the prey and therefore to ease the angler during the recovery phase of the prey.

Under particular fishing conditions, the convexity of the prebent elements 5a can be rotated rightwards or leftwards to cope with the lateral movings of the prey that has swallowed the hook or possible lateral windblasts.

The rod 4 according to the invention can also carry on an action with features intermediate to those above described by alternating, in the longitudinal assembling direction of the rod 4, tubular elements 5a with the downwards convexity and tubular elements 5a with the upwards convexity.

As described above, it appears obvious that the process according to the invention allows to obtain a fishing rod 4 that can carry out an advantageous multiplicity of point-actions, mid-actions or parabolic-actions owing to the different orientation imparted to the longitudinal prebending of the rod 4.

Moreover, the advantageous features of the rod 4 are obtained without using more rigid and expensive materials and without increasing the weight and the size of the rod 4 that, on the contrary, can be advantageously reduced at a parity of performances with the traditional fishing rods.

The description of the invention has made particular reference to a fishing rod 4 formed by insertable hollow tubular elements 5 but it is apparent that the so far described advantages are attainable with all types of fishing rods.

In fact, the rod 4 according to the invention can be of a single-piece type, of the type formed partly by prebent elements according to the invention and partly by traditional straight elements or a rod whole formed by prebent elements having the same orientation or rotated as to orientations different the one from the other.

Obviously, to the rod 4 according to the invention variations and modifications may be applied however without departing from the main herebelow claimed features.

For example, the rod 4, or at least a part of, it may have more longitudinal prebendings having different the one from the other bending radii.

## Claims

1. Fishing rod (4) characterized in that its body, or at least a part of it, has at least one longitudinal prebending, that said prebending can be oriented in more positions with respect to the longitudinal axis of the rod (4) and that different bending actions of the rod (4) correspond to said positions of the longitudinal prebending.

2. Fishing rod (4) according to claim 1 and composing tubular elements (5) that are longitudinally connectible one after the other by a male-female insertion of fixed type or of telescopic type, characterized in that at least one of said elements (5a) presents at least one longitudinal prebending having one or more bending radii and that said prebending can be oriented in angular positions that are corresponding or staggered with respect to the angular positions of the prebendings of the adjacent tubular elements (5a).

3. Fishing rod (4) according to claims 1 and 2, comprising length adjusting elements connectible to its butt-grip in order to vary the fishing range, characterized in that at least one of said length adjusting elements has at least one longitudinal prebending.

4. Method of manufacturing from composite a fishing rod (4) according to the preceding claims, said method comprising the following steps of:
- wrapping the composite, preferably composed of thermoplastic and/or thermosetting material and of fibers and/or wires of reinforcing material, around conic-cylindric forming mandrels (6);
- covering of the composite wrapped around the mandrel (6) with a holding plastic film and finally polymerizing and/or setting of the composite in its desired tubular shape by means of heat treating, characterized in that the forming step of the composite comprises the forming of said longitudinal prebending of the tubular elements (5a) by using forming mandrels (6) that are correspondingly bent.

5. Method according to claim 4, characterized in that said longitudinal prebending of the tubular elements (5a) is carried out by using straight forming mandrels (6) that are suitable to be elastically bent during the polymerization and/or thermoforming of the composite wrapped around them, said forming mandrels (6) being also moreover suitable to be returned to their original rectilinear position after the separation from the respective polymerized and/or thermoformed tubular element (5a).

6. Method according to claim 4, characterized in that said longitudinal prebending is carried out by thermoforming of tubular elements (5a) previously polymerized and/or thermoformed around forming mandrels (6).
